# EUROPEAN PATENT APPLICATION

(11) **EP 4 513 416 A1**
(43) Date of publication of application: **26.02.2025**
(21) Application number: 24191960.4
(22) Date of filing: 31.07.2024
(51) Int. Cl.: G06Q 30/04, G06Q 30/0601, H02J 3/00, G06Q 50/06

(54) **ENERGY MANAGEMENT APPARATUS AND ENERGY MANAGEMENT METHOD**

(30) Priority: 21.08.2023 KR 20230109235
(71) Applicant: LG Electronics Inc., Yeongdeungpo-gu Seoul 07336 (KR)
(72) Inventor: KIM, Jaehong, 06772 Seoul (KR); KIM, Hongkyu, 06772 Seoul (KR); LEE, Jihack, 06772 Seoul (KR); JEON, Hyejeong, 06772 Seoul (KR)
(74) Representative: Schornack, Oliver

(57) **Abstract**

Proposed are an energy management apparatus and an energy storage apparatus. The energy management apparatus includes a consumption amount forecast unit configured to forecast an electric power consumption pattern of a user, and a control module configured to provide energy cost saving information varying with a battery capacity, based on a time span-based billing rate, the battery capacity, and the electric power consumption pattern.

## Description

### TECHNICAL FIELD

The present disclosure relates to an energy management apparatus and the energy management method and, more particularly, to an energy management apparatus and an energy management method that are capable of providing information, which is to be stored, on an optimal battery capacity that makes it possible to reduce an energy cost.

### BACKGROUND ART

Presently, South Korea's electricity billing rate varies depending on electricity usage applications, differing among households, general purpose, education, industrial, and other sectors. An increasing block rate pricing system, also known as a progressive rate system, applies to an electricity billing rate for the household sector.

The progressive rate system, which applies to the electricity billing rate for the household sector, presents persistent discriminatory problems in that high-income one-person households benefit from lower electricity bill rates than low-income multiple-person households and in that excessively higher billing rates apply to households with high electricity consumption than in other countries.

The energy storage apparatus, also known as an energy storage system (ESS), refers to a storage apparatus that stores electric power excessively generated in a power plant and transmits the stored electric power when the electric power supply is temporarily insufficient. The ESS is configured to include a battery that stores electricity, a power conditioning system (PCS) for efficiently managing the battery, an energy management system (EMS), a battery management system (BMS), and the like.

In the state of California in the U.S. and in other countries, there is a growing demand for new renewable energy. This demand stems from requirements mandating the installation of photovoltaics facilities or the like when constructing new houses. Accordingly, the energy storage apparatus (ESS) (or a battery) is installed within a house or building. The energy storage apparatus is supplied with new renewable energy and stores surplus electric power. Electric power for loads is supplied from the energy storage apparatus whenever necessary, and energy is efficiently consumed.

In addition, as described above, a system company generally implements a variable electricity billing rate in which the unit price of electric power usage, that is, a time of use (TOU) rate, varies across different time spans.

Accordingly, in order to economically use electric energy, it is necessary to distribute loads so that an electric power amount used during a time span with a high transfer rate is used during a time span with a low unit price of electric power usage.

In a case where a time span-based electricity billing rate, that is, the TOU rate, is not considered, when an electricity generation amount generated by an energy generator (including a new renewable energy generation apparatus) installed in each house exceeds a consumption amount, the energy storage apparatus is charged with surplus electric power, or the surplus electric power is sold to a system. Furthermore, when the consumption amount is larger than the electricity generation amount, the electricity generation amount is consumed for electric power for loads, and, when the electricity generation amount is insufficient, an additionally necessary electricity amount is supplied from the energy storage apparatus. When the electric power in the energy storage apparatus is used up, an additionally necessary electricity amount is received (purchased) from the system to supply the required electric power to the loads.

At this point, in order to minimize an electricity billing rate of energy to be purchased from the system, the power conditioning system (PCS), in charge of charging and discharging, of the energy storage apparatus (ESS) may make an adjustment through charging and discharging control in such a manner that electricity is received (purchased) during a low-load time span (that is, during a time span with a low electricity billing rate).

In recent years, there has been a growing demand for new renewable energy. This demand stems from requirements mandating the installation of photovoltaics facilities or the like when constructing new houses. Many companies are in preparation to launch home energy storage systems (ESS) that operate in conjunction with a solar panel.

In a case where the home ESS is utilized in a house where the photovoltaics (PV) facilities are installed, foreign material (dust, bird poop, snow, or fallen leaves) or stains due to snow or rain may accumulate on the surface of the solar panel. This accumulation can block exposure to sunlight, thereby reducing the efficiency of sunlight generation.

Accordingly, a shortage of electricity generation in the ESS leads to an increase in the purchasing amount of electric power, resulting in higher electric charges for a house that utilizes the ESS. Moreover, there is a possibility of a failure occurring within a solar panel component itself.

### SUMMARY

Therefore, to obviate those problems, an aspect of the detailed description is to provide an energy management apparatus and an energy management method that are capable of providing energy cost saving information according to a battery capacity that is optimized based on an electric power consumption pattern.

Another aspect of the detailed description is to provide an energy management apparatus and an energy management method that are capable of providing energy cost that can be reduced according to a battery capacity and proposing an optimized battery capacity.

To achieve these and other advantages and in accordance with the purpose of the present disclosure, as embodied and broadly described herein, there is provided an energy management apparatus including: a consumption amount forecast unit configured to forecast an electric power consumption pattern of a user; and a control module configured to provide energy cost saving information varying with a battery capacity, based on a time span-based billing rate, the battery capacity, and the electric power consumption pattern.

In the energy management apparatus, the control module may compute an electric power amount that is daily consumed on average, based on the electric power consumption pattern, and, when storing the computed electric power amount in a battery, the control module may compute, as daily energy cost saving information, a charging cost that results from subtracting a charging cost incurred during a time span with the lowest billing rate from a charging cost incurred during a time span with the highest billing rate.

In the energy management apparatus, the control module may compute a consumption electric power amount that is daily consumed on average, based on the electric power consumption pattern, and the control module may determine the number of batteries, which is to be recommended, based on the computed consumption electric power amount and the battery capacity.

In the energy management apparatus, the number of batteries, which is to be recommended, may vary with the computed consumption electric power amount.

In the energy management apparatus, the control module may provide break-even point information for an additionally purchased battery, which is computed based on unit price information of the battery and the energy cost saving information.

The energy management apparatus may further include an electricity generation amount forecast unit configured to forecast an electricity generation amount generated by a solar panel, wherein the control module may determine the number of batteries, which is to be recommended, based on a time span-based electricity generation amount forecasted by the electricity generation amount forecast unit, the computed electric power amount, and the battery capacity.

In the energy management apparatus, the electricity generation amount forecast unit may forecast an electricity generation amount to be generated in an installation-scheduled region, based on an electricity generation amount generated in a solar panel of another energy management apparatus installed in the installation-scheduled region.

In the energy management apparatus, the electricity generation amount forecast unit may generate an electricity generation amount forecast model on a per-region basis, and may forecast the electricity generation amount to be generated in the installation-scheduled region, based on electricity generation amount information of a solar panel installed in the installation-scheduled region.

In the energy management apparatus, the electricity generation amount forecast unit may generate a community electricity generation amount forecast model through communication with at least one electricity generation amount forecast model included in an energy management apparatus installed in the installation-scheduled region, and the electricity generation amount forecast unit may forecast the electricity generation amount to be generated in the installation-scheduled region using the community electricity generation amount forecast model.

In the energy management apparatus, the control module may determine an electricity generation amount of the solar panel based on the forecasted electricity generation amount and the electric power consumption pattern.

In the energy management apparatus, the control module may determine the electricity generation capacity of the solar panel, additionally using the number of batteries that is determined based on the energy cost saving information.

In the energy management apparatus, the time span-based billing rate may vary among electric power supply companies, and the control module may determine any one of different time span-based rates based on the electric power consumption pattern.

According to the present disclosure, an energy management apparatus can forecast a saving effect based on an electric power consumption pattern of a customer who uses the energy management apparatus, and can recommend an optimized battery capacity that makes it possible to reduce an energy cost based on the saving effect.

According to the present disclosure, an optimization recommendation algorithm that can propose an optimized electricity generation capacity of a solar panel can be provided based on a forecasted electricity amount, an electric power consumption pattern, and a battery capacity.

### BRIEF DESCRIPTION OF THE DRAWINGS

FIG. 1 is a conceptual diagram for describing one example that is referenced to describe a house in which an ESS according to a first embodiment of the present disclosure is installed.
FIG. 2 is a block diagram that is referenced to describe an energy management apparatus according to the first embodiment of the present disclosure.
FIG. 3 is a flowchart that is referenced to describe an energy management method according to a second embodiment of the present disclosure.
FIGS. 4, 5, 6, 7, 8, 9, 10, 11, 12, 13, 14, 15, 16, 17, and 18 describe the energy management method illustrated in FIG. 3.

### DETAILED DESCRIPTION OF THE EMBODIMENTS

Description will now be given in detail according to exemplary implementations disclosed herein, with reference to the accompanying drawings. For the sake of brief description with reference to the drawings, the same or equivalent components may be provided with the same or similar reference numbers, and description thereof will not be repeated. A suffix "module" or "unit" used for elements disclosed in the following description is merely intended for easy description of the specification, and the suffix itself is not intended to give any special meaning or function. In describing the embodiments disclosed herein, moreover, the detailed description will be omitted when specific description for publicly known technologies to which the invention pertains is judged to obscure the gist of the present disclosure. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Display devices presented herein may be implemented using a variety of different types of devices. Examples of such devices include cellular phones, smart phones, laptop computers, digital broadcasting terminals, personal digital assistants (PDAs), portable multimedia players (PMPs), navigators, slate PCs, tablet PCs, ultra books, wearable devices (for example, watch-type terminals, (smart watches), glass-type terminals (smart glasses), head mounted displays (HMDs)), and the like.

By way of non-limiting example only, further description will be made with reference to particular types of display devices. However, such teachings apply equally to other types of display devices, such as those types noted above. In addition, these teachings may also be applied to stationary robots such as digital TVs, desktop computers, digital signages, and the like.

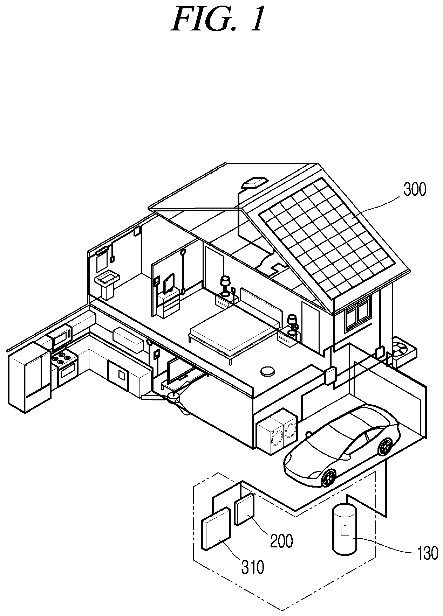

FIG. 1 is a conceptual diagram for describing one example that is referenced to describe a house in which an ESS 200 according to a first embodiment of the present disclosure is installed.

As illustrated in FIG. 1, the house in which an energy management apparatus is installed may include a solar panel 300, a battery 310, the ESS 200, and a control module 130.

The solar panel 300 refers to a panel in use for converting solar energy into electric power. Electric power generated in the solar panel 300 may be stored in at least one of the battery 310 and the ESS 200.

The electric power generated in the solar panel 300 is stored in the battery 310. The battery 300 serves to supply electric energy (electric power) to appliances within the house that require electric energy.

The ESS 200 may control the solar panel 300, the battery 310, and various smart equipment included within the house in such a manner that new renewable energy, such as solar light and wind power, which is difficult to use to produce electric power at desired times, is stored and used when necessary.

For the purpose of control, the ESS 200 may find application in the electricity generation field for generating electricity, the transmission and distribution field for transmitting the generated electricity, and the electricity user household (customer) field for actually consuming the distributed electricity.

The control module 130 may control various equipment, such as the solar panel 300, the battery 310, the ESS 200, and smart equipment within the house, which are described above.

In addition, the control module 130 may detect an abnormality of the solar panel 300, determine the cause of a failure of the solar panel 300, and provide a user with an alarm service and information on a service provider capable of addressing the failure.

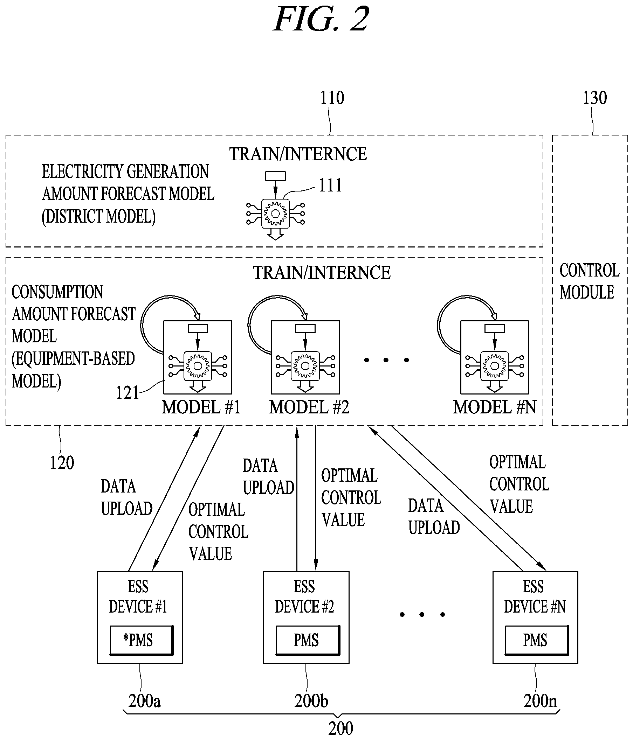

FIG. 2 is a block diagram that is referenced to describe the energy management apparatus according to the first embodiment of the present disclosure.

The energy management apparatus according to the present disclosure may also be a server that manages energy on a per-country/region basis and be an apparatus that manages energy on a per-district/building/house basis.

The energy management apparatus may forecast an electricity generation amount, which can be generated in an apparatus (for example, a solar panel or the like) capable of generating energy in an entity under control (a country, region, district, building, house, or the like), and a consumption amount, which is consumed in the entity under control, and may receive as much electric power as insufficient, in advance from a system during a low load time span.

At this point, the energy management apparatus according to the present disclosure may also perform forecast on a per-one-hour basis, taking into consideration the efficiency of energy to be produced, and may also determine an electric power amount to be received, taking into consideration the remaining storage space in the battery (or the energy storage apparatus).

In addition, the energy management apparatus according to the present disclosure may forecast (compute) more precisely an insufficient amount by correcting estimated values of the electricity generation amount and the consumption amount before a price-increasing point in time(or an up-riser) in a time of use (TOU) rate.

For this purpose, the energy management apparatus according to the present disclosure, as illustrated in FIG. 1, includes an electricity generation amount forecast unit 110, a consumption amount forecast unit 120, and the control module 130. The electricity generation amount forecast unit 110 includes an electricity generation amount forecast model 111. The consumption amount forecast unit 120 includes a consumption amount forecast model 121. The control module 130 adjusts an electric power purchase point in time and an electric power amount on a per-time span basis, based on a forecast electricity generation amount, which is output from the electricity generation amount forecast model 111, and on a forecast consumption amount, which is outputted from the consumption amount forecast model 121.

The electricity generation amount forecast model 111 and the consumption amount forecast model 121 may be artificial intelligence models that are trained through machine learning.

Artificial intelligence refers to a field that involves methods of performing tasks that typically require human intelligence. Machine learning refers to a field that involves methods of defining and addressing various problems arising in the artificial intelligence field. Machine learning is also defined as algorithms for increasing performance on given tasks over time by learning from experience with the given tasks.

An artificial neural network (ANN) is a model that is used in the machine learning. As such, the ANN may refer to all models that consist of artificial neurons (nodes) interconnected through synapses to form a network and have problem-solving capabilities. The ANN may be defined by connection patterns between neurons in different layers, learning processes of updating model parameters, and activation functions of generating output values.

The ANN may include an input layer, an output layer, and, selectively, one or more hidden layers. Each layer may include one or more neurons. The ANN may include synapses interconnecting these neurons. In the ANN, each neuron may output input signals, which are input through the synapses, a weighted value, and a function value of the activation function with respect to a bias.

A model parameter refers to a parameter that is determined through learning, and includes a weighted value of a synapse connection, a neuron bias, and similar factors. A hyperparameter refers to a parameter required to be set before learning in a machine learning algorithm and includes a learning rate, the number of times of repetition, a mini-batch size, an initialization function, and similar factors.

A learning objective of the ANN is to determine a model parameter for minimizing a loss function. The loss function may be used as an index for determining an optimal model parameter in the learning process of the ANN.

The machine learning may be categorized by a learning technique into the following types: supervised learning, unsupervised learning, and reinforcement learning.

The supervised learning may refer to a method used to train the ANN in a state where a label for learning data is given. The label may refer to a correct answer (or a result value) that the ANN is required to infer in a case where the learning data is input into the ANN. The unsupervised learning may refer to a method used to train the ANN in a state where the label for learning data is not given. The reinforcement learning may refer to a training method used to train an agent, defined under a given environment, to select actions or a sequence of actions, which maximize accumulation rewards in each state.

The machine learning, realized using a deep neural network (DNN) consisting of a plurality of hidden layers, among intelligent neural networks, is also referred to as deep learning, and the deep learning is part of the machine learning. The machine learning is hereinafter referred to as deep learning.

The electricity generation amount forecast model 111 and the consumption amount forecast model 121 may be among several types of neural networks described above.

As one example, the electricity generation amount forecast model 111 and the consumption amount forecast model 121 may output (compute or determine) a time span-based forecast electricity generation amount and a time span-based forecast consumption amount through the supervised learning.

For this purpose, the electricity generation amount forecast model 111 may output as an output value the time span-based forecast electricity generation amount, using as an input value at least one of the following factors: past electricity generation amounts, weather conditions, and energy electricity generation information.

As illustrated in FIG. 2, the electricity generation amount forecast model 111 may forecast the electricity generation amount for a target under control (for example, on a per-region basis).

In addition, the consumption amount forecast model 121 may output, as an output value, the time span-based forecast consumption amount, using, as an input value, at least one of the following factors: past consumption amounts, weather conditions, holiday information, and an appliance consumption amount.

The consumption amount forecast model 121 may have a smaller unit for control to forecast the consumption amount subdivided on a per-household basis or on a per-equipment basis than the electricity generation amount forecast model 111.

Subsequently, the control module 130 may adjust (or determine) the electric power purchase point in time and the electric power amount on a per-time span basis, based on the forecast electricity generation amount, which is output from the electricity generation amount forecast model 111, and on the forecast consumption amount, which is outputted from the consumption amount forecast model 121.

The control module 130 may transmit and receive data through communication with a power management system (PMS) of the energy storage apparatus (the ESS). The control module 130 may receive information on an electric power amount stored in the energy storage apparatus, and on a space, available for storage, in the energy storage apparatus.

In addition, the control module 130 may perform overall control for energy charging/discharging of the energy storage apparatus.

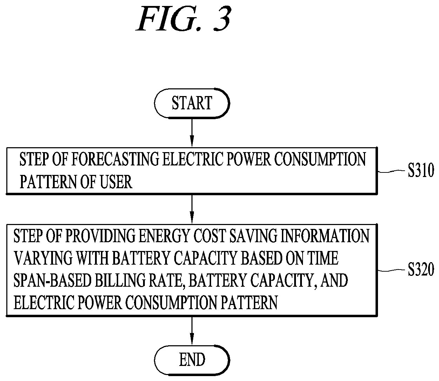

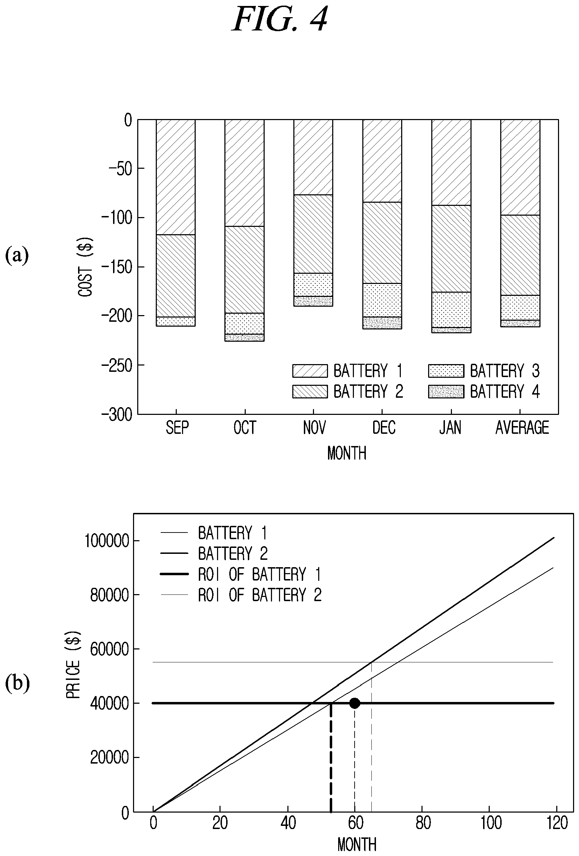

FIG. 3 is a flowchart that is referenced to describe an energy management method according to a second embodiment of the present disclosure. FIG. 4, 5, 6, 7, 8, 9, 10, 11, 12, 13, 14, 15, 16, 17, and 18 are conceptual diagrams that are referenced to describe the energy management method illustrated in FIG. 3.

The energy management method according to the present disclosure may be performed under the control of the energy management apparatus.

The energy management apparatus according to the first embodiment of the present disclosure may provide recommendation services for facilities associated with batteries, time of use (TOU) rates, photovoltaics (PV) panels (or solar panels), and the like based on an electric power consumption pattern of a customer.

In the related art, a current situation is that many ESS facilities companies recommend the battery capacity by computing in proportion to a solar panel. In addition, in the related art, in many cases, a solar panel is also installed without strict standards.

According to the present disclosure, there may be provided the energy management apparatus and the energy management method that are capable of performing a function of proposing an electric power billing rate and the like suitable for a customer through the battery capacity, which varies with an electric power consumption pattern of a user (a consumer or a customer), the PV panel capacity, and comparisons between electric power billing rates.

Specifically, the energy management apparatus according to the present disclosure may recommend to the user an additional battery product based on a saving amount achieved on a per-battery basis and on a per-billing rate basis. The ESS makes this recommendation available by forecasting and processing a saving effect based on a consumption amount used by the customer.

In addition, according to the present disclosure, there may also be a notification provided to the effect that adding an ESS battery can save a larger saving amount than investing in PV panels on a per-district basis.

In addition, according to the present disclosure, the purchase or addition of a battery may be proposed (or recommended). This proposal is conveyed in the form of a report that explains a payback period based on a saving amount and an ROI that will be finally available to a customer.

For this purpose, with reference to FIG. 3, according to the present disclosure, a step of forecasting an electric power consumption pattern of a user is performed (S310). As one example, this electric power consumption pattern of the user may be performed by the consumption amount forecast unit 120.

For example, the consumption amount forecast unit 120 may output, as an output value, a time span-based forecast consumption amount, which is consumed on a per-time span basis, using, as input values, past consumption amounts, weather conditions (temperature, humidity, and the like), weekday and weekend holiday information, the possession or non-possession of an electric vehicle, and an appliance consumption amount.

Subsequently, according to the present disclosure, a step of providing energy cost saving information varying with a battery capacity, based on a time span-based billing rate, the battery capacity, and the electric power consumption pattern is performed (S320).

The control module 130 may provide the energy cost saving information varying with the battery capacity, based on the time span-based billing rate (TOU rate), which is set to vary with a time span, the battery capacity, and the electric power consumption pattern.

At this point, the energy cost saving information varying with the battery capacity may refer to information on a cost saving that is achieved by avoiding the purchase of electric power during a time span with a high billing rate. This avoidance is possible by purchasing, in advance, energy during a time span with a low billing rate and storing the purchased energy in a battery and by using the energy stored in the battery during a time span with a high billing rate.

At this point, in a case where an electric power amount, consumed during a time span with a high billing rate, exceeds the battery capacity, there may occur a case where energy needs to be purchased during a time span with a high billing rate.

The energy management apparatus according to the present disclosure may compute the battery capacity that is required to avoid purchasing electric power during a time span with a high billing rate, based on the electric power consumption pattern.

In addition, the energy management apparatus may also provide information (for example, return-on-investment information) indicating how long it takes energy cost savings to surpass the cost of increasing the battery capacity. This information is obtained by using the cost of increasing the battery capacity and the information on the energy cost savings that can be daily achieved.

For example, the energy management apparatus, as illustrated in (a) of FIG. 4, may compute (or determine) the energy cost saving information varying with the number of batteries, based on the electric power consumption pattern of the user on a per-time span basis.

The control module 130 may compute information that results from subtracting a charging cost incurred during a time span with a low billing rate from an electricity reception cost during a time span with a high billing rate, using the time span-based billing rate. Then, the control module 130 may compute energy cost saving information based on the computed information, the battery capacity, and the electric power consumption pattern.

For example, the control module 130 may determine that the more electric power amount the customer consumes, or the more consumption amount the customer consumes during a time span with a high billing rate, the greater the energy cost savings, or that the more the battery capacity increases, the greater the energy cost savings.

That is, the control module 130 may provide and recommend the energy cost saving information varying with the battery capacity, based on an energy consumption pattern of the customer.

In addition, as illustrated in (b) of FIG. 4, the control module 130 may compute the information on the energy cost savings that increase with the number of batteries over time.

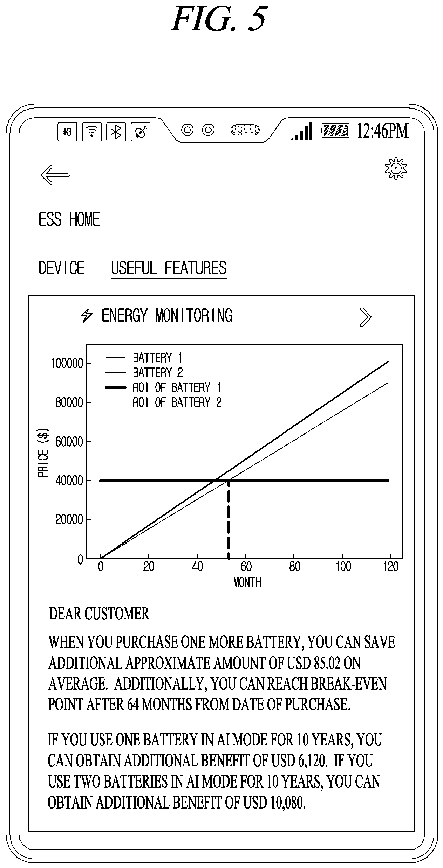

Subsequently, the control module 130, as illustrated in FIG. 5, may analyze electric charge savings and may provide information on how long it takes energy cost savings to surpass the cost of purchasing the battery.

The control module 130 may compute a consumption amount that is daily consumed on average, based on the electric power consumption pattern. When storing the computed electric power amount in the battery, the control module 130 may compute, as daily energy cost saving information, a charging cost that results from subtracting a charging cost incurred during a time span with the lowest billing rate from a charging cost incurred during a time span with the highest billing rate.

In addition, the control module 130 may compute a consumption electric power amount that is daily consumed on average, based on the electric power consumption pattern, and may determine the number of batteries, which is to be recommended, based on the computed consumption electric power amount and the battery capacity.

The number of batteries, which is to be recommended, may vary with the computed consumption electric power amount.

The reason for this is that the more the consumption electric power is daily consumed on average or the more the battery capacity increases, the energy cost savings increase without causing any problem, and that, conversely, the less the consumption electric power is daily consumed on average, the more the battery capacity decreases without causing any problem.

The control module 130 may compute and provide break-even point information for an additionally purchased battery, based on unit price information of the battery and the energy cost saving information.

That is, as illustrated in FIG. 5, the break-even point information for the additionally purchased battery may refer to a point in time when the price of the additionally purchased battery equals to the energy cost savings. The break-even point information may be understood as information on how long it takes the energy cost savings to surpass the cost of purchasing the battery.

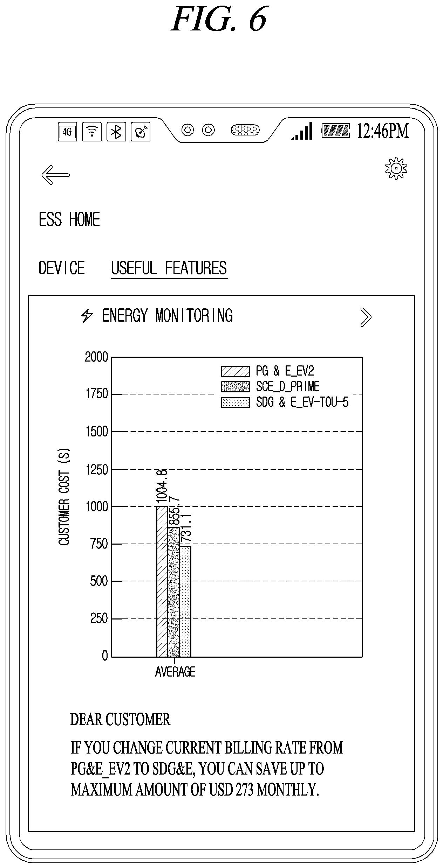

With reference to FIG. 6, the time span-based billing rate may vary among electric power supply companies (PG&E_EV2, SCE_D_PRIME, and SDG&E_EV-TOU-5)

That is, the control module 130 may recommend an optimal billing rate by simulating an electric charge that will be incurred when a possible billing rate is chosen. This recommendation is made in such a manner that an efficient billing rate (an electric power supply company) suitable for the electric power consumption pattern of the user can be selected from among various billing rates that vary among electric power supply companies.

For this purpose, as illustrated in FIG. 6, the control module 130 may determine any one of different time span-based billing rates based on the electric power consumption pattern and may provide the determined information.

In addition, according to the present disclosure, the energy management apparatus may further include the electricity generation amount forecast unit 110 that forecasts the electricity generation amount of the solar panel (or the PV panel) 300.

The control module 130 may determine the number of batteries, which is to be recommended, based on the time span-based electricity generation amount forecasted by the electricity generation amount forecast unit 110, the computed electric power amount, and the battery capacity.

That is, the control module 130 may recommend the number of batteries in the above-described detail of the battery capacity recommendation, additionally considering the time span-based electricity generation amount forecasted by the electricity generation amount forecast unit 110.

The reason for this is that the battery capacity, which is to be recommended, may differ when additionally considering the electricity generation amount generated in the solar panel 300 because the electricity generation amount generated on a per-time span basis by the solar panel 300 can be additionally stored in the battery, instead of considering only a billing rate that varies with a time span.

The electricity generation amount forecast unit 110 may forecast an electricity generation amount to be generated in an installation-scheduled region based on an electricity generation amount generated in a solar panel 300 of another energy management apparatus installed in the installation-scheduled region.

The electricity generation amount forecast unit 110 may generate the electricity generation amount forecast model 111 on a per-region basis and may also forecast the electricity generation amount to be generated in the installation-scheduled region based on information on weather in the installation-scheduled region and electricity generation amount information of the solar panel 300 installed in the installation-scheduled region.

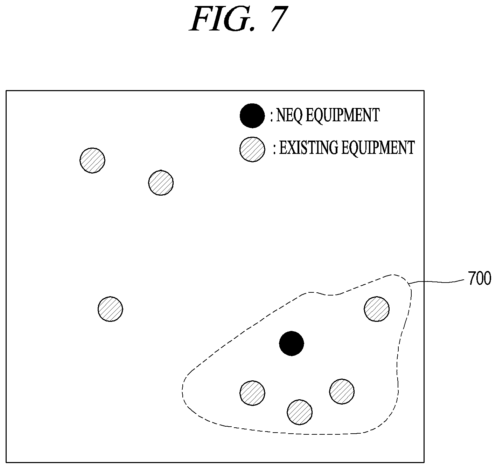

In addition, with reference to FIG. 7, the electricity generation amount forecast unit 110 may generate a community electricity generation amount forecast model 700 through communication with at least one electricity generation amount forecast model 111 included in an energy management apparatus installed in the installation-scheduled region and may forecast the electricity generation amount to be generated in the installation-scheduled region using the community electricity generation amount forecast model 700.

Moreover, the control module 130 may determine an electricity generation capacity of the solar panel 300 based on the forecasted electricity generation amount and the electric power consumption pattern.

For example, the control module 130 may determine the optimal electricity generation capacity of the solar panel 300 for energy saving based on the forecasted electricity generation amount and the electric power consumption pattern.

In the case of a household that is determined, by the electric power consumption pattern, to consume a small electric power consumption amount, a high electric generation capacity of many solar panels 300 is unnecessary. However, as the electric power consumption amount increases, there may be a need for a higher electric generation capacity of many solar panels 300.

In addition, although the electricity generation amount and the consumption amounts are equal to each other, based on the electricity generation pattern and the electric power consumption pattern, the control module 130 may determine the electricity generation capacity of the solar panel 300, which is to be recommended, in a manner that varies with a time span.

For example, in a case where a time span with many consumption patterns overlaps a time span with many electricity generation patterns, the control module 130 may determine the electricity generation capacity of the solar panel 300 in an increasing manner. Conversely, in a case where the electricity generation amount in accordance with an electricity generation pattern is small, or in a case where a time span with many consumption patterns does not overlap a time span with many electricity generation patterns, the control module 130 may determine the electricity generation capacity in a decreasing manner.

In addition, when determining the electricity generation capacity of the solar panel 300, the control module 130 may also additionally use the number of batteries that is determined based on the earlier determined energy cost saving information.

For example, the control module 130 may determine the electricity generation capacity of the solar panels 300 of which the number increases as the number of batteries increases, and may determine the electricity generation capacity of the solar panels 300 of which the number decreases as the number of batteries decreases.

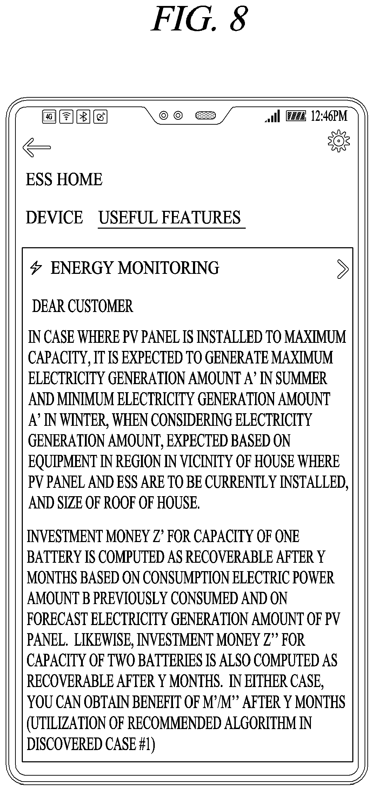

As illustrated in FIG. 8, the control module 130 may forecast a season-based or time span-based electricity generation amount based on the energy management apparatus already installed in the installation-scheduled region or on the community electricity generation amount forecast model.

In addition, the control module 130 may compute and provide the information on the energy cost savings that can be achieved by adding a battery, and the information on the break-even point of additional purchase of the battery, based on the electricity generation amount and the consumption pattern.

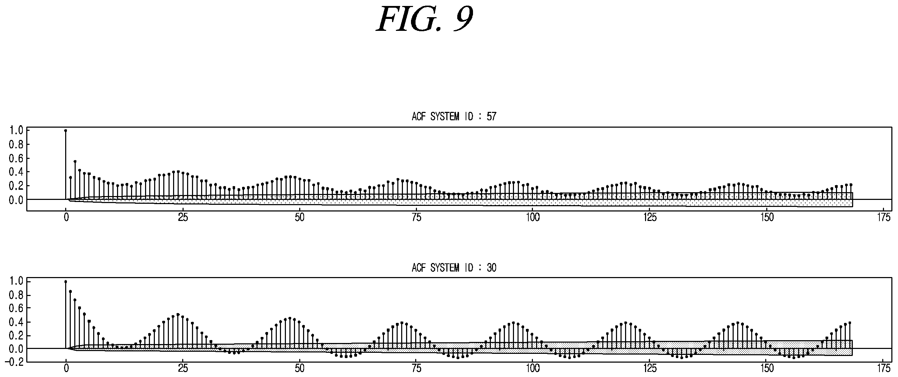

FIG. 9 is a group of graphs showing electric power consumption patterns of different equipment. From FIG. 9, it can be seen that Equipment No. 57 (in a graph on the upper portion of FIG. 9) demonstrates a pattern of non-stationary data.

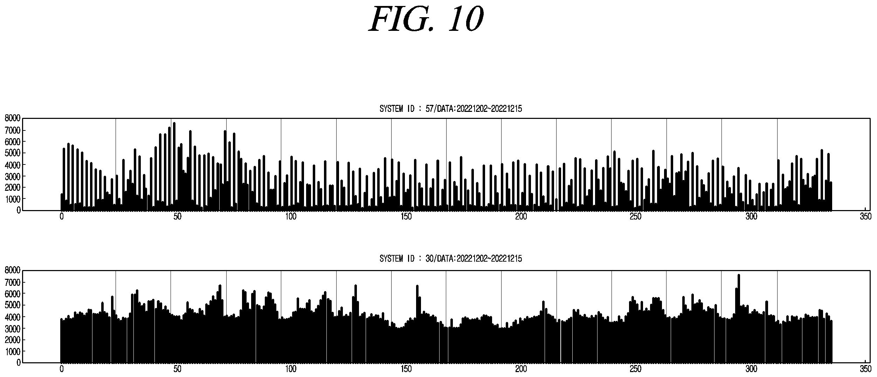

FIG. 10 is a group of graphs showing the absolute values of consumption amounts consumed by Equipment No. 57 and Equipment No. 30 on a per-hour basis. As illustrated in FIG. 10, the consumption amount forecast unit 110 can recognize the electric power consumption pattern on a per-hour basis.

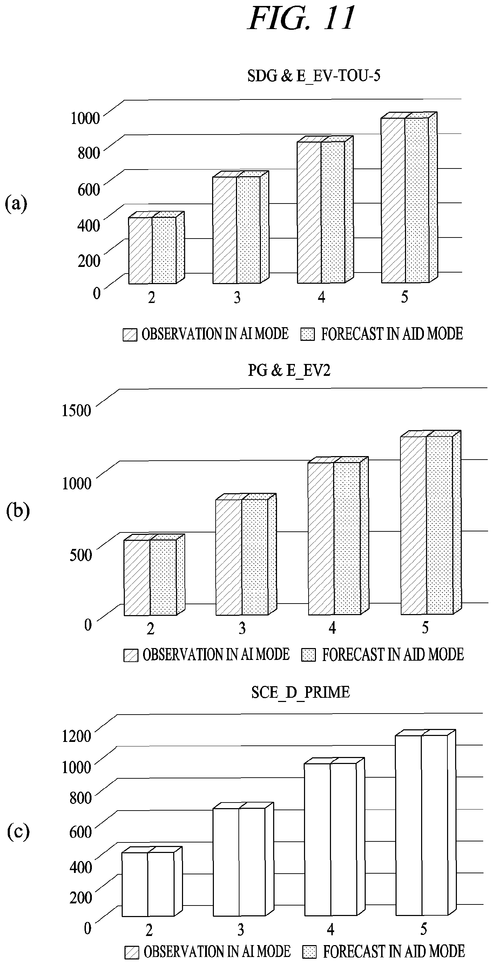

(a), (b), and (c) of FIG. 11 are graphs each comparing forecasted and observed values based on a TOU rate of each electricity power supply company. The forecasted value represents the difference (that is, the energy cost saving information) in an amount of electricity reception charge, which results from the energy management method according to the present disclosure. From the graphs, it can be seen that there is little difference between the forecasted and observed values.

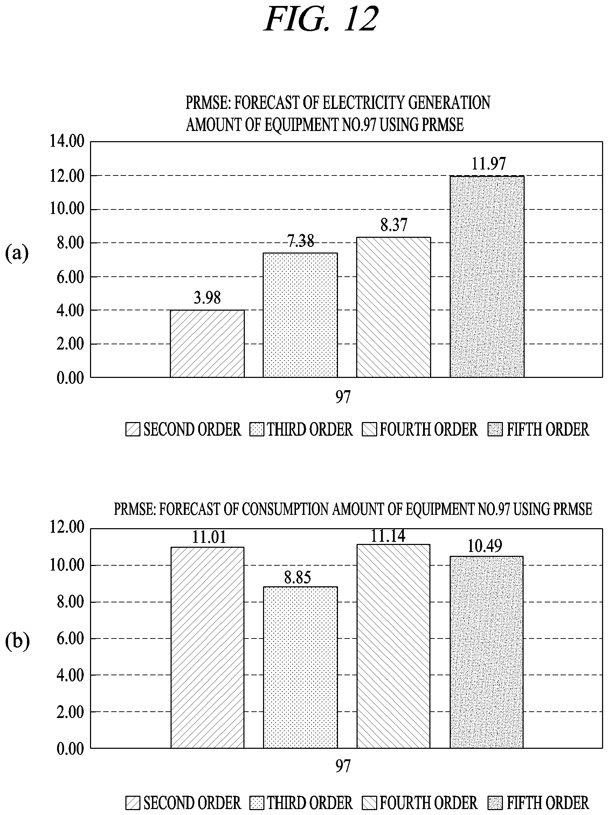

FIG. 12 is a group of graphs showing a forecasted value of an electricity generation amount of Equipment No. 97 and a forecasted value of a consumption amount of Equipment No.97.

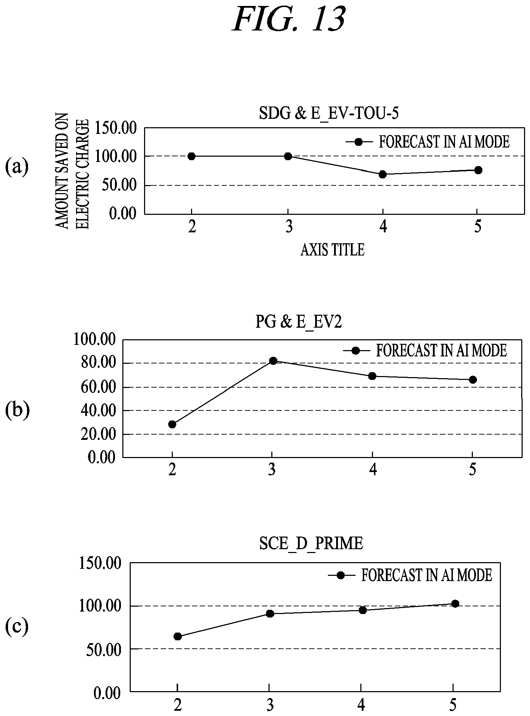

FIG. 13 is a group of graphs showing saving effects that vary with a TOU rate setting.

(a) to (c) of FIG. 13 are graphs showing amounts of saving that vary with time span-based billing rates among different electric power supply companies.

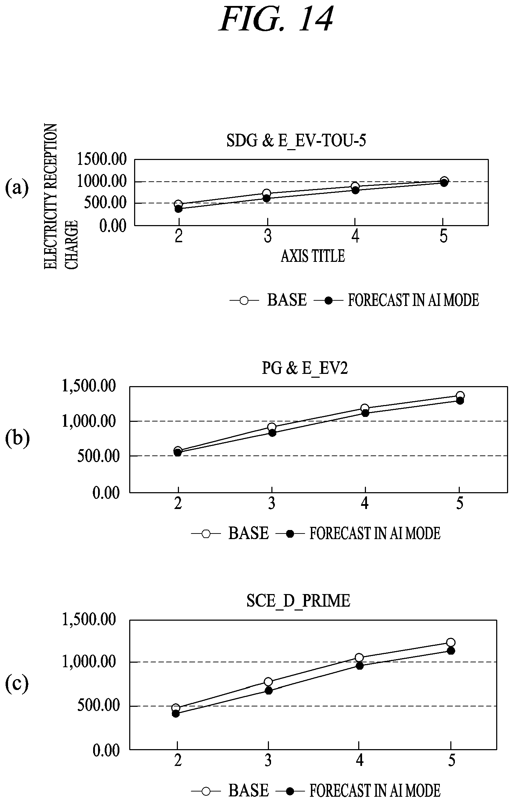

(a) to (c) of FIG. 14 are graphs showing amounts of electricity reception charge that vary with time span-based billing rates among different electric power supply companies.

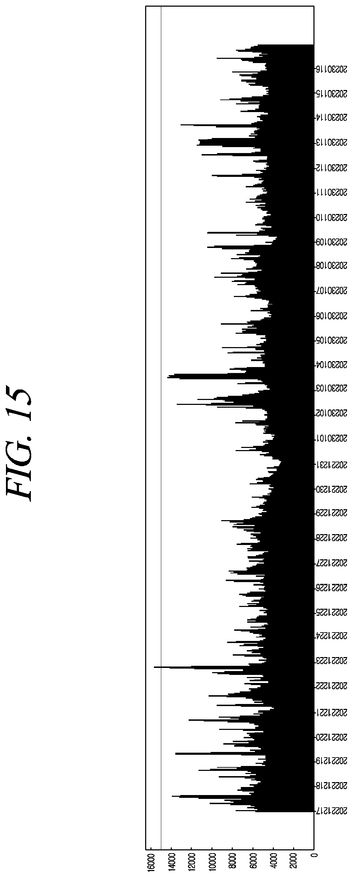

FIG. 15 is a graph showing that a consumption amount is large on a per-hour basis and that a battery capacity is low in contrast with the consumption amount.

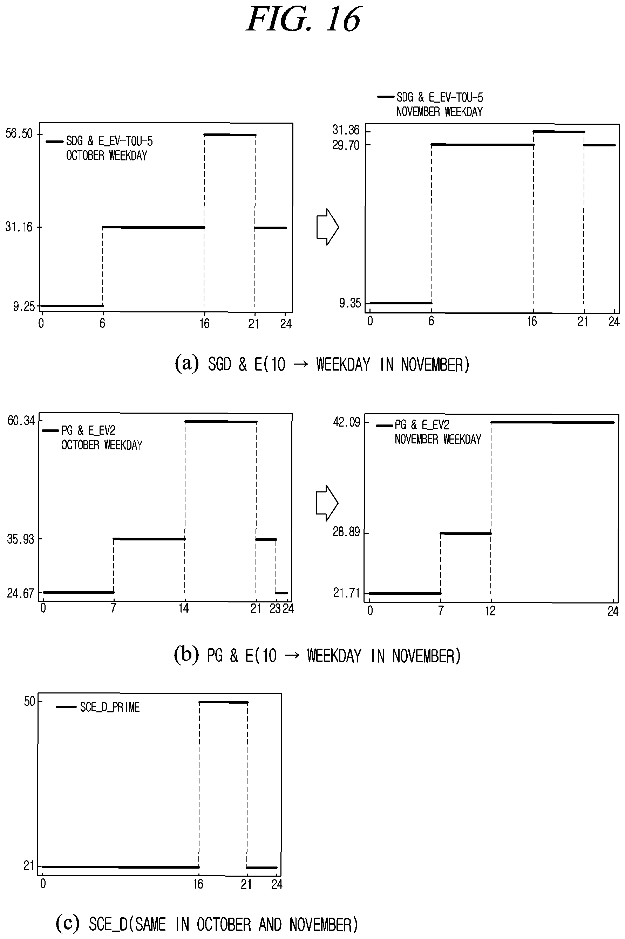

Accordingly, from FIG. 16, it can be seen that, in a case where a consumption amount is large and where a battery capacity is low, TOU rates of SGD&E and PG&E electric power supply companies, are not competitive.

In contrast, it can be seen that, even in a case where a consumption amount is large and where a battery capacity is low, SCE_D electricity power supply company, provides a consistent TOU rate.

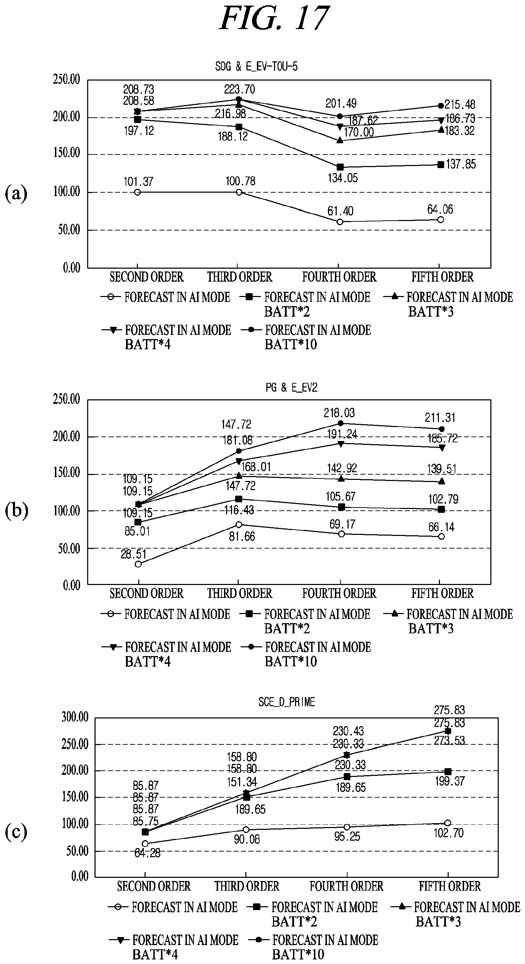

FIG. 17 a group of graphs showing that, in a case where there is no restriction on the battery capacity, a threefold or more saving amount is possible.

For example, from (c) of FIG. 17, it can be seen that, at a TOU rate of SCE_D, as the battery capacity increases, a threefold or more saving amount becomes available. In contrast, from (a) and (b) of FIG. 17, it can be seen that as the battery capacity increases, energy saving is possible in SDG&E_EVTOU-5 and PG&E_EV2, but a saving amount is smaller than in SCE_D_PRIME.

Accordingly, according to the present disclosure, there is provided an energy management method that is capable of recommending or proposing a battery capacity (or the number of batteries) optimized for energy saving, considering not only a battery capacity or an electric power consumption pattern, but also a time span-based TOU rate that varies among electric power supply companies.

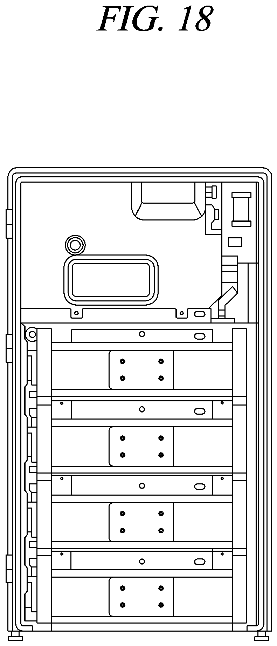

FIG. 18 is a view illustrating one example of the ESS 200 that is the energy management apparatus according to the first embodiment of the present disclosure. The PCS constitutes the upper portion of the ESS, and four batteries constitute the lower portion thereof.

According to the present disclosure, the saving effect can be forecasted based on the electric power consumption pattern of the customer who uses the energy management apparatus, and the optimized battery capacity that makes it possible to reduce the energy cost based on the saving effect can be recommended.

According to the present disclosure, an optimization recommendation algorithm that can propose the optimized electricity generation capacity of the solar panel can be provided based on the forecasted electricity amount, the electric power consumption pattern, and the battery capacity.

So far, the preferred embodiment of the present disclosure has been illustrated and described, but the present disclosure is not limited to the specific embodiment, and many alternatives, modifications, and variations will be made by those skilled in the art without departing from the concept of the present disclosure and those variations should not be individually understood from the technical idea or forecast

## Claims

1. An energy management apparatus comprising:
a consumption amount forecast unit (120) configured to forecast an electric power consumption pattern of a user; and
a control module (130) configured to provide energy cost saving information varying with a battery capacity, based on a time span-based billing rate, the battery capacity, and the electric power consumption pattern.

2. The energy management apparatus of claim 1, wherein the control module (130) is configured to compute an electric power amount that is daily consumed on average, based on the electric power consumption pattern, and
wherein the control module (130) is configured to, when storing the computed electric power amount in a battery (310), compute, as daily energy cost saving information, a charging cost that results from subtracting a charging cost incurred during a time span with the lowest billing rate from a charging cost incurred during a time span with the highest billing rate.

3. The energy management apparatus of any one of claims 1 to 2, wherein the control module (130) is configured to:
compute a consumption electric power amount that is daily consumed on average, based on the electric power consumption pattern, and
determine the number of batteries, which is to be recommended, based on the computed consumption electric power amount and the battery capacity.

4. The energy management apparatus of any one of claims 1 to 3, further comprising:
an electricity generation amount forecast unit (110) configured to forecast an electricity generation amount generated by a solar panel (300),
wherein the control module (130) is configured to determine the number of batteries, which is to be recommended, based on a time span-based electricity generation amount forecasted by the electricity generation amount forecast unit (110), the computed electric power amount, and the battery capacity.

5. The energy management apparatus of claim 4, wherein the electricity generation amount forecast unit (110) is configured to forecast an electricity generation amount to be generated in an installation-scheduled region, based on an electricity generation amount generated in a solar panel (300) of another energy management apparatus installed in the installation-scheduled region.

6. The energy management apparatus of claim 5, wherein the electricity generation amount forecast unit (110) is configured to:
generate an electricity generation amount forecast model (111) on a per-region basis, and
forecast the electricity generation amount to be generated in the installation-scheduled region, based on electricity generation amount information of a solar panel (300) installed in the installation-scheduled region.

7. The energy management apparatus of any one of claims 5 to 6, wherein the electricity generation amount forecast unit (110) is configured to:
generate a community electricity generation amount forecast model (700) through communication with at least one electricity generation amount forecast model (111) included in an energy management apparatus installed in the installation-scheduled region, and
forecast the electricity generation amount to be generated in the installation-scheduled region using the community electricity generation amount forecast model (700).

8. The energy management apparatus of any one of claims 5 to 7, wherein the control module (130) is configured to determine an electricity generation amount of the solar panel (300) based on the forecasted electricity generation amount and the electric power consumption pattern.

9. The energy management apparatus of claim 8, wherein the control module (130) is configured to determine the electricity generation capacity of the solar panel (300), additionally using the number of batteries that is determined based on the energy cost saving information.

10. The energy management apparatus of any one of claims 1 to 9, wherein the time span-based billing rate varies among electric power supply companies, and
wherein the control module (130) is configured to determine any one of different time span-based rates based on the electric power consumption pattern.
